# EUROPÄISCHE PATENTANMELDUNG

(11) **EP 2 065 772 A2**
(43) Veröffentlichungstag der Anmeldung: **03.06.2009**
(21) Anmeldenummer: 08020766.5
(22) Anmeldetag: 28.11.2008
(51) Int. Cl.: G05B 19/4069

(54) **Verfahren und Fertigungssysteme zum Herstellen von Bauteilen unter Ausnutzung von geometrischen Freiräumen auf Fertigungsanlagen**

(30) Priorität: 30.11.2007 DE 102007057803
(71) Anmelder: FIT Fruth Innovative Technologien GmbH, 92331 Parsberg (DE)
(72) Erfinder: Fruth, Carl Johannes, 92331 Parsberg (DE); Oster, Alexander, 92231 Parsberg (DE)
(74) Vertreter: Kramer - Barske - Schmidtchen

(57) **Zusammenfassung**

Die vorliegende Erfindung betrifft allgemein ein Verfahren zum Herstellen von mindestens einem ersten und mindestens einem weiteren Bauteil (120, 121, 122) in einer Fertigungsanlage (10, 20, 30), die einen definierten Bauraum (100) zum Fertigen von mehreren Bauteilen (111-116, 120-122) hat. Das Verfahren umfasst das Bereitstellen von digitalen ersten Bauteildaten, die die Lage und die Konturen des mindestens einen ersten Bauteils (111-116), das sich in dem Bauraum (100) befindet, repräsentieren, das Bereitstellen von den Bauraum (100) repräsentierenden digitalen Bauraumdaten, das Übersenden der digitalen ersten Bauteildaten und der digitalen Bauraumdaten zum Visualisieren des mindestens einen ersten Bauteils (111-116) in dem Bauraum (100) für einen potentiellen Auftraggeber (50), das Empfangen von digitalen weiteren Bauteildaten, die mindestens ein weiteres Bauteil (120-122) und dessen Lage in dem Bauraum (100) repräsentieren, von dem potentiellen Auftraggeber (50), wobei die digitalen weiteren Bauteildaten dadurch generiert wurden, dass das mindestens eine weitere, noch nicht in Auftrag gegebene Bauteil (120-122) in dem definierten Bauraum (100) auf der Grundlage der Visualisierung des mindestens einen ersten Bauteils (111-116) und dessen Lage in dem definierten Bauraum (100) platziert wurde, und das Fertigen des mindestens einen weiteren Bauteils (120, 121, 122) und des mindestens einen ersten Bauteils (111-116) zur gleichen Zeit in dem gleichen Bauraum (100) einer Fertigungsanlage (10, 20, 30).

## Beschreibung

### TECHNISCHES GEBIET

Die vorliegende Erfindung betrifft verschiedene Verfahren und Fertigungssysteme zum Herstellen von Bauteilen unter Ausnutzung von geometrischen Freiräumen auf Fertigungsanlagen. Außerdem betrifft die Erfindung ein beispielsweise für ein eingangs genanntes Verfahren bevorzugtes Anonymisierungsverfahren, um Dritten in den genannten Fertigungssystem zu fertigende Bauteile nur in anonymisierter Weise darzustellen. Schließlich betrifft die vorliegende Erfindung ein Computerprogramm das auf einem Computerprozessor ausführbare Anweisungen zum Ausführen eines der hierin offenbarten Verfahren umfasst. Und auch ein mittels Computer lesbares Medium, auf dem ein Computerprogramm der zuvor genannten Art abgespeichert ist, ist Teil der Erfindung.

### HINTERGRUND DER ERFINDUNG

Heutzutage werden unterschiedlichste Fertigungsanlagen zur Herstellung von Erzeugnissen bzw. Bauteilen eingesetzt, die bestimmte definierte Bauräume aufweisen. In den Bauräumen dieser Fertigungsanlagen können auf Grund der Art der Herstellungsverfahren oftmals ein oder mehrere Bauteile in einem Fertigungsgang erzeugt werden. So zählen hierzu beispielsweise alle bekannten Rapid Prototyping- und Rapid Manufacturing-Verfahren als auch ganz allgemein alle heutzutage bekannten Fertigungsanlagen, die unter den Begriff "Freeform Fabrication" zu subsumieren sind. Zu derartigen Verfahren bzw. Fertigungsanlagen können beispielsweise Fertigungsanlagen zugeordnet werden, die dreidimensionale Bauteile direkt aus 3D-CAD-Daten fertigen können.

Diese auch als Schichtbausysteme bezeichneten Verfahren und Fertigungsanlagen werden insbesondere zur schnellen und kostengünstigen Herstellung von Prototypen oder Kleinserien eingesetzt. Die Hauptanwendung der bisher industriell eingesetzten Rapid Prototyping- und Rapid Manufacturing-Systemen liegt in der Herstellung von Bauteilen aus organischen Werkstoffen wie Polymeren und Wachsen. Mehr und mehr finden aber auch derartige Systeme bei der Herstellung von metallischen oder keramischen Bauteilen Verwendung. Insbesondere werden metallische Bauteile über die Schmelzphase durch das sogenannte Laserschmelzen/sintern oder Elektronenstrahlschmelzen erzeugt.

Gemeinsames Merkmal aller bekannten Systeme der genannten Art ist der schichtweise Aufbau des Werkstücks. Normalerweise werden hierfür 3D-CAD-Daten zunächst in eine Vielzahl von einzelnen Schichten bzw. Höhenschnitte zerlegt, um daraus im eigentlichen Herstellungsprozess das Werkstück aufzubauen. Es müssen also für alle bekannten Schichtbauverfahren zur Herstellung von dreidimensionalen Körpern für jede Schicht die Körperumrissdaten vorhanden sein. Körperumrissdaten sind hier die Daten, die in der jeweiligen Schicht genau festlegen, welche Bereiche der Schicht je nach Art der eingesetzten Schichtbautechnologie zu belichten, zu bedrucken, zu schmelzen oder zu sintern sind.

Die für die vorliegende Erfindung zum Einsatz kommenden Schichtaufbauverfahren können beispielsweise folgende Verfahren sein: 3DP der Firma Zcorp, PLT der Firma Kira, Polyjet der Firma Objet, SMS der Firma Sintermask, SLS sowie DMLS der Firmen EOS , SLA sowie IMLS der Firma 3D Systems, Lasercusing der Firma Konzeptlaser, Laserschmelzen der Firma MCP, Electron Beam Melting der Firma Arcam und Electron Beam Sintering sein.

Üblicher Weise wird von einem Kunden ein Auftrag für die Herstellung ein oder mehrerer Bauteile an eine Fertigungsstätte bzw. Firma (Dienstleister) übermittelt. Durch den Dienstleister wird dann festgelegt, welche der Fertigungsanlagen zur Herstellung der gewünschten Bauteile geeignet ist. Sodann wird ein Job erstellt, der, wenn möglich, ein oder mehrere Bauteile in einem definierten Bauraum der Fertigungsanlage umfasst und auch Bauteile von unterschiedlichen Kunden enthalten kann. Sobald die Bauteile in dem zur Verfügung stehenden definierten Bauraum der Fertigungsanlage virtuell positioniert sind, wird üblicher Weise die Fertigung begonnen. Es ist zwar anzustreben, dass bei derartigen Fertigungsanlagen ein möglichst hoher Beladungsgrad in einem Bauraum erreicht wird, jedoch ist es oftmals nicht möglich, den Beladungsgrad zu maximieren, da die Auftraggeber bzw. Kunden die Herstellung der Bauteile bis zu einem festgelegten Zeitpunkt wünschen. Aus diesem Grund ist es oftmals nicht möglich jede Fertigungsanlage und den zugehörigen Bauraum optimal zu nutzen, da oftmals nicht abgewartet werden kann, bis ein für den jeweiligen Bauraum einer Fertigungsanlage verbleibender Freiraum durch weitere Bauteile eines anderen Kunden gefüllt werden kann. Diese Problematik hat auch dahingehend Konsequenzen, dass der dem Kunden zu nennende Herstellungspreis eines Bauteils lediglich auf der Grundlage der von diesem Kunden gewünschten Bauteile basierend errechnet wird.

Allgemein sind aus der DE 102 25 854 A1, DE 10 2005 014 979 A1 und DE 10 2005 024 822 A1 Verfahren bekannt, die auf digitale Daten von Bauteilen etc. zugreifen.

So offenbart die genannte DE 102 25 854 A1 ein Verfahren zu schnellen Konstruktion von medizinischen Prothesen sowie nach diesem Verfahren hergestellter Prothesen bekannt. Ausgehend von medizinischen Bilddaten soll eine schnelle, genauere und automatische Formgestaltung für Prothesen ermöglicht werden. In der oben erwähnten DE 10 2005 014 979 A1 ist ein Verfahren und eine Vorrichtung zur Planung von Fertigungseinrichtungen offenbart. Dieses bekannte Verfahren zur Planung von Fertigungseinrichtungen nutzt Mittel zur visuellen Aufzeichnung. Ein Verfahren zur Optimierung der Transportbewegung von Werkstücken in Transferpressen ist aus der DE 10 2005 024 822 A1 bekannt. Hierin wird ein Verfahren zur Optimierung der Transportbewegung von Werkstücken in Transferpressen offenbart, bei dem durch Manipulation einer Bewegungskurve in einer digitalen Abbildertransferpresse Rückschlüsse auf spezifische Werkstücke und Werkzeugdaten gezogen werden können.

Schließlich ist aus der DE 600 10 943 D2 (entspricht der EP 1 031 392 B1) ein Herstellungsverfahren sowie eine Vorrichtung für ein Steuerungssystem in einem selektiv ablagernden Modellierungssystem bekannt. Die vorliegende Druckschrift ist insbesondere auf Techniken bezogen, die primär die selektive Objektherstellung durch Ablagerungsmodellierung betrifft. Es wird aber auch erwähnt, dass diese Techniken Anwendungen in anderen Rapid-Prototyping- und Manufacturing-Technologien Anwendung finden können. Ein Aspekt des hierin beschrieben Rapid-Prototyping-Systems umfasst die Kombination von Mitteln zum Annehmen von mehreren Aufträgen, die bereits in einer Auftragswarteschlange angeordnet sind. Jeder Auftrag umfasst dabei eine Anfrage zum Aufbauen eines dreidimensionalen Objektes durch zumindest ein Rapid-Prototyping-Gerät. Es sind ferner Mittel zum Kombinieren von zwei oder mehreren Aufträgen von dem Rapid-Prototyping-Gerät durchgeführten Aufbauprozess vorhanden. Bei dem beschrieben Verfahren dient dazu bereits vorhandene, in einer Auftragswarteschlange angeordnete Aufträge abzuarbeiten. Offensichtlich ist es für Dritte nicht möglich, direkt in dieses System einzugreifen.

Ein der Erfindung zugrundeliegendes technisches Problem kann beispielsweise darin bestehen, ein oder mehrere Fertigungsanlagen mit den jeweils zugehörigen definierten begrenzten Bauräumen besser als bisher zu nutzen, also insbesondere deren Beladungsgrad erhöhen zu können.

Ein weiteres technisches Problem der vorliegenden Erfindung könnte darin bestehen, potentiellen Kunden bzw. Auftraggebern die Bauräume der zur Verfügung stehenden Fertigungsanlagen mit den jeweils darin zu fertigenden Bauteilen visuell darzustellen, ohne dass Kenntnisse über die Bauteile, insbesondere deren genaue Form und Aussehen Unberechtigten zugänglich gemacht wird. Besonders bei vertraulichen Prototypen ist dies der Fall

### DARSTELLUNG DER ERFINDUNG

Gemäß einem ersten Aspekt der vorliegenden Erfindung wird ein Verfahren zum Herstellen von mindestens einem ersten und mindestens einem weiteren Bauteil in einer Fertigungsanlage, die einen definierten Bauraum zum Fertigen von mehreren Bauteilen hat, vorgeschlagen. Das Verfahren umfasst das Bereitstellen von digitalen ersten Bauteildaten, die die Lage und die Konturen des mindestens einen ersten Bauteils, das sich in dem Bauraum befindet, repräsentieren. Es werden außerdem auch den Bauraum repräsentierende digitale Bauraumdaten bereitgestellt. Die digitalen ersten Bauteildaten und die digitalen Bauraumdaten werden übersandt zum Visualisieren des mindestens einen ersten Bauteils in dem Bauraum für einen potentiellen Auftraggeber. Von dem potentiellen Auftraggeber werden digitale weitere Bauteildaten, die mindestens ein weiteres Bauteil und dessen Lage in dem Bauraum repräsentieren, empfangen, wobei die digitalen weiteren Bauteildaten dadurch generiert wurden, dass das mindestens eine weitere, noch nicht in Auftrag gegebene Bauteil in dem definierten Bauraum auf der Grundlage der Visualisierung des mindestens einen ersten Bauteils und dessen Lage in dem definierten Bauraum platziert wurde. Dann erfolgt das Fertigen des mindestens einen weiteren Bauteils und des mindestens einen ersten Bauteils zur gleichen Zeit in dem gleichen Bauraum einer Fertigungsanlage.

Die digitalen ersten Bauteildaten repräsentieren die Lage und vollständige Form oder Gestalt der ersten Bauteile in dem Bauraum. Erfindungsgemäß werden diese digitalen ersten Bauteildaten und die digitalen Bauraumdaten, die die Größe des Bauraums einer Fertigungsanlage repräsentieren, einem potentiellen Auftraggeber oder User zur Verfügung gestellt und visualisiert. Der Visualisierungsschritt ermöglicht es, einen Bauraum und die darin platzierten ersten Bauteile für einen potentiellen Auftraggeber zu veranschaulichen, vorzugsweise in 3D. Es kann dann ein virtuelles Anordnen von mindestens einem weiteren, noch nicht in Auftrag gegebenem Bauteil in dem definierten Bauraum auf der Grundlage der Visualisierung des mindestens einen ersten Bauteils und dessen Lage in dem definierten Bauraum erfolgen. Es ist nun möglich, die digitalen weiteren oder zweiten Bauteildaten, die mindestens ein weiteres Bauteil und dessen Lage in dem Bauraum repräsentieren, zu ermitteln bzw. zu erfassen. Diese digitalen zweiten Bauteildaten werden von dem potentiellen Auftraggeber oder User übermittelt. Sobald feststeht, dass keine weiteren Bauteile in den Bauraum einzufügen sind, werden das mindestens eine weitere Bauteil und das eine oder die mehreren ersten Bauteile gleichzeitig in der Fertigungsanlage gefertigt.

Anzumerken ist, dass die Verwendung des Ausdrucks "erste" Bauteile hierin nur dazu, diejenigen Bauteile, die in dem Bauraum zu fertigen sind und virtuell platziert wurden, von den "weiteren" Bauteilen zu unterscheiden, die dann von Dritten in dem Bauraum eingefügt werden sollen. Außerdem ist hervorzuheben, dass im vorliegenden Fall zumindest dann von einem reellen Bauraum einer Fertigungsanlage die Rede ist, wenn es um die tatsächliche Herstellung von Bauteilen geht. In den meisten anderen Fällen wie z.B. dem Darstellen von Bauräumen, Einfügen von Bauteilen in einen Bauraum, ist ein "virtueller" Bauraum gemeint, der einem Auftraggeber oder User normalerweise in 3D dargestellt wird. Gleiches gilt auch für den Begriff "Bauteil". Mit dem hier ebenfalls verwendeten Begriff "Job" oder "Baujob" ist ein virtueller Bauraum mit allen darin (virtuell) platzierten (virtuellen) Bauteilen gemeint.

Der der vorliegenden Erfindung zugrunde liegende Gedanke besteht darin, erstmals einen oder mehrere Bauräume einer oder mehrerer Fertigungsanlagen verschiedenen potentiellen Kunden bzw. Auftraggebern "zugänglich" zu machen, zusammen mit den darin bereits befindlichen, zu fertigenden ersten Bauteilen. Dadurch, dass die für jeden "Job" beladenen Bauräume mit ersten Bauteilen weiteren potentiellen Auftraggebern vor der Auftragserteilung zugänglich sind, ist es diesen möglich, eventuell vorhandene Freiräume in den bereits mit ersten Bauteilen beladenen Bauräumen von Fertigungsanlagen mit weiteren Bauteilen zu bestücken, wodurch beispielsweise die Zeitspanne bis zur Lieferung der weiteren Bauteile verringert werden kann, weil ja nicht gewartet werden muss, bis der Baujob, also das Fertigen der ersten Bauteile in dem Bauraum, beendet ist. Außerdem kann so der potentielle Auftraggeber gleich die Fertigungskapazität bis zu einem bestimmten Datum prüfen. Beispielsweise ist es auch möglich, für den Fertiger die Herstellungskosten pro Bauteil zu senken, da nunmehr in dem gleichen "Job" mehr Bauteile gefertigt werden.

In einer beispielhaften Ausführungsform der vorliegenden Erfindung kann der Dienstleister auch vorsehen, dass die durch das Hinzufügen eines oder mehrerer weiteren Bauteile tatsächlich geringeren Baukosten sich auch in einem verringerten Angebotspreis zur Herstellung der ersten und/oder der weiteren Bauteile niederschlagen und der Dienstleister kann, falls dies von ihm gewünscht wird, in einer weiteren beispielhaften Ausführungsform der vorliegenden Erfindung diesen Kostenvorteil auch dem Auftraggeber der ersten Bauteile und/oder dem Auftraggeber der weiteren Bauteile übermitteln. Damit kann der Dienstleister möglicherweise seine Attraktivität für potentielle Auftraggeber erhöhen.

In einer weiteren beispielhaften Ausführungsform des erfindungsgemäßen Verfahrens kann ein rechnergestützter Prüfschritt vorteilhaft sein, in dem Software gestützt anhand der Bauteildaten geprüft wird, ob der verbleibende Freiraum in dem definierten Bauraum der Fertigungsanlage ausreicht, das mindestens eine weitere Bauteil zu fertigen.

Für den Fall, dass mehrere Fertigungsanlagen verfügbar sind, kann in einer beispielhaften Ausführungsform der vorliegenden Erfindung vorgesehen sein, dass diese mehreren Fertigungsanlagen einem User angezeigt werden, aus denen er dann die für ihn geeignete Fertigungsanlage auswählen kann.

In einer weiteren beispielhaften Ausführungsform der vorliegenden Erfindung kann es vorteilhaft sein, dass für den Fall, dass eine Fertigungsanlage mehrere Bauräume aufweist bzw. in einer Fertigungsanlage bereits mehrere beladene Bauräume, die jeweils einen Job dieser Fertigungsanlage darstellen, vorhanden sind, dem User alle Jobs, dass heißt Bauräume mit darin zu fertigenden ersten Bauteilen, visualisiert dargestellt werden, aus denen er dann den für ihn geeignetsten auswählen kann.

In einer weiteren beispielhaften Ausführungsform der vorliegenden Erfindung kann es vorteilhaft sein, die ersten Bauteildaten zu anonymisieren. Erfindungsgemäß werden die anonymisierten Lage- und Konturdaten der ersten Bauteile potentiellen Auftraggebern zugänglich gemacht, die nicht Auftraggeber der ersten Bauteile sind. Beispielsweise kann dieses Anonymisieren durch Voxeln erfolgen, so dass der gesamte Volumenkörper eines ersten Bauteils in einzelne aneinandergefügte räumliche Einzelgebilde aufgeteilt wird. Durch die Zerlegung in einzelne Volumina eines ersten Bauteiles wird dessen äußeres Erscheinungsbild je nach Größe und Form der gewählten Volumina etwas bis stark verändert. Dem Voxeln kann auch noch ein "Aufblähen" nachgeschaltet sein, d.h., die einzelnen Voxel bzw. Volumenelemente eines Bauteils werden mit einem bestimmten Faktor in ein oder mehrere Richtungen eines Koordinatensystems vergrößert und damit wird der gesamte Körper des Bauteils "aufgebläht". Ein Anonymisieren eines ersten Bauteils kann auch dadurch erfolgen, dass ein erstes Bauteil beispielsweise von einem quader- oder würfelförmigen Volumen umgeben wird, in den das Bauteil gerade noch hinein passt. Anstatt eines quader- oder würfelförmigen Volumens als "Umhüllende" für ein erstes Bauteil, können selbstverständlich auch andere beliebige geometrische Volumenformen wie beispielsweise Kreise, Zylinder etc. gewählt werden. Eine weitere Form der Anonymisierung ergibt sich aus einer fertigungsbedingten Veränderung wie dem Anbringen von Stützvolumen, dem Aufdicken von fertigungstechnisch zu dünnen Wänden oder Sperren von Bereichen innerhalb von Bauteilen (z.B. das Innere einer Flasche sperren, da diese Teile evtl. nicht mehr aus der Flasche entfernt werden können). Unterschiedliche Arten der Anonymisierung können z.B. auch kombiniert werden.

Gemäß einem weiteren Aspekt der vorliegenden Erfindung wird ein Fertigungssystem zum Herstellen von mindestens einem ersten und mindestens einem weiteren Bauteil vorgeschlagen. Ein solches Fertigungssystem umfasst mindestens eine Fertigungsanlage mit einem definierten begrenzten Bauraum, in dem ein oder mehrere Bauteile gefertigt werden können. Es ist ferner ein Verteilersystem vorhanden, das mit der mindestens einen Fertigungsanlage verbunden ist, wobei das Verteilersystem derart ausgebildet ist, dass die digitalen Daten der Bauräume jeder Fertigungsanlage und die digitalen ersten Bauteildaten von in den jeweiligen Bauräumen zu fertigenden ersten Bauteilen verwaltet werden. Eine Empfangseinrichtung ist dazu ausgebildet, von einem potentiellen Auftraggeber digitale weitere Bauteildaten zu empfangen, die mindestens ein weiteres, noch zu fertigendes Bauteil und dessen Lage in dem Bauraum repräsentieren. Diese digitalen weiteren Bauteildaten wurden dabei dadurch generiert, dass das mindestens eine weitere, noch nicht in Auftrag gegebene Bauteil in dem definierten Bauraum auf der Grundlage der Visualisierung des mindestens einen ersten Bauteils und dessen Lage in dem definierten Bauraum platziert wurde.

Das Verteilersystem umfasst beispielsweise einen Server mit Datenbank, in der alle vorbereiteten Jobs für alle Fertigungsanlagen, insbesondere eine Vielzahl von unterschiedlichen Fertigungsanlagen verwaltet werden. Es ist somit bekannt, welcher Bauraum für welchen Job mit welchen ersten Bauteilen "beladen" ist.

Das erfindungsgemäße Fertigungssystem umfasst in einer beispielhaften Ausführungsform mindestens ein User-Terminal, das mit dem Verteilersystem verbunden ist und dem auf Anfrage alle Fertigungsanlagen mit den jeweiligen Jobs zur Verfügung gestellt werden. Ein Userterminal kann eine Visualisierungseinrichtung umfassen, die dazu ausgebildet ist, einen oder mehrere Bauräume mit den darin zu fertigenden Bauteilen einem Benutzer visuell, insbesondere in 3D-Darstellung, darzustellen. Ein Userterminal kann ferner eine Eingabeeinrichtung beinhalten, die dazu ausgebildet ist, in einem mittels der Visualisierungseinrichtung dargestellten Bauraum mit den darin positionierten, eventuell anonymisierten ersten Bauteilen mindestens ein weiteres Bauteil zu positionieren. Insbesondere kann eine Übermittlungseinrichtung vorhanden sein, die dazu ausgebildet ist, die digitalen Daten eines Bauraums und der darin positionierten ersten und weiteren Bauteile an das Verteilersystem zu übermitteln.

Erfindungsgemäß können somit erstmals Jobs über allgemein bekannte Kommunikationswege wie beispielsweise das Internet zur Verfügung gestellt werden. Ein potentieller Auftraggeber kann damit schnell und zügig vorab überprüfen, ob zu dem von ihm gewünschten Zeitpunkt ein von ihm gewünschtes Bauteil gefertigt werden kann. Insbesondere ist es auch möglich, dass er unmittelbar durch Einfügen eines Bauteils in einen bestehenden Job überprüfen lassen kann, ob das von ihm gewünschte Bauteil in diesem Job hergestellt werden kann. In einer beispielhaften Ausführungsform der vorliegenden Erfindung ist es mit einem Kostenberechnungsmodul auch möglich, in diesem Fall die Kosten für ein solches weiteres Bauteil in einem Job anhand der nunmehr in diesem Job zu erstellenden ersten und weiteren Bauteile zu überprüfen und neu zu berechnen. Dadurch ist es einem potentiellen Auftraggeber auch möglich, durch Hinzufügen weiterer Bauteile die Bauteilkosten eventuell zu reduzieren, wenn ihm durch das System die Herstellungskosten auf der Grundlage des verringerten Freiraums neu berechnet werden.

Unterschiedliche Kostenfunktion mit Positionsbewertung können als Ergebnis nicht nur die Herstellkosten sondern auch andere Eigenschaften bewerten, so z.B die Bauzeit, die erzeugbare Produktqualität oder die Prozessstabilität bei einer Veränderung der "Beladung" des Baujobs. Beispielsweise ist die Bewertung eines Bauteils und damit u.a. dessen Herstellkosten in einfacher Weise über das Volumen des Bauteils berechenbar.

Für die Visualisierung der ersten und weiteren Bauteile in dreidimensionaler Darstellung können übliche Verfahren und Vorrichtungen wie Monitore etc. eingesetzt werden.

Fertigungsanlagen, deren Kosten zum großen Teil durch den Materialaufwand des Umbautenraums oder anderen nicht von der Geometrie der Bauteile abhängigen Komponenten festgelegt werden, sind für das vorliegende erfindungsgemäße Verfahren und System besonders geeignet. Beispielsweise können gerade bei sogenannten Schichtbauverfahren Füllprobleme für die jeweiligen Bauräume entstehen. Ebenso sind aber auch viele andere Fertigungsanlagen mit bestimmten Beschickungsproblemen und damit Kosten der zu fertigenden Bauteile behaftet, bei denen regelmäßig ein durch die Form des zu erstellenden Bauteils abhängiges zweidimensionales oder dreidimensionales Packproblem auftritt, wie beispielsweise Laserschneiden. All diesen Fertigungsanlagen ist gemein, dass die Platzierung von beliebigen Bauteilen erhebliche Lücken im Bauraum einer solchen Fertigungsanlage entstehen lässt. Diese freien, nicht durch bestehende Aufträge gut füllbaren Lücken können somit unter Umständen gefüllt werden.

Schließlich ist gemäß einem weiteren Aspekt der Erfindung erstmals ein möglicherweise separates Vorverfahren bzw. Modul für ein Verfahren zum Herstellen von mindestens einem weiteren Bauteil in einer Fertigungsanlage, die einen definierten Bauraum zum Fertigen von unterschiedlichen ersten Bauteilen hat, geschaffen, mit dem die an User zur Verfügung gestellten Bauteildaten bewusst verändert werden. Ein solches Anonymisierungsverfahren zur Verwendung in einem Verfahren zum Herstellen von mindestens einem ersten und mindestens einem weiteren Bauteil in einer Fertigungsanlage umfasst also das Bereitstellen von digitalen ersten Bauteildaten, die die Lage und die Konturen des mindestens einen ersten Bauteils in dem Bauraum repräsentieren, das rechnergestützte Anonymisieren der Konturen des mindestens einen ersten Bauteils, dadurch dass die digitalen ersten Bauteildaten derart verändert werden, dass zumindest die Konturen des mindestens einen ersten Bauteils und dadurch eine Visualisierung des mindestens einen ersten Bauteils verändert werden. Die veränderten digitalen ersten Bauteildaten werden für potentielle Auftraggeber, die nicht Auftraggeber des mindestens einen ersten Bauteils sind, bereitgestellt.

Er werden also nur die anonymisierten Daten potentiellen weiteren Auftraggebern zur Verfügung gestellt, um die Sicherheitsbedürfnisse der Auftraggeber zu erfüllen, aber gleichzeitig die Maximierung der Auslastung einer Fertigungsanlage erlaubt. Der Vollständigkeit halber sei erwähnt, dass zweite Bauteile nach dem Hinzufügen in den Baujob zu ersten Bauteilen werden und alles hierfür Gesagte wie z.B. Anonymisierung auch für diese ehemals zweiten Bauteile, die nunmehr gemäß der gewählten Terminologie zu ersten Bauteilen werden, gilt.

Gemäß einem weiteren Aspekt der vorliegenden Erfindung wird ein Computerprogramm bereitgestellt, das auf einem Computerprozessor ausführbare Anweisungen zum Ausführen eines der hierin offenbarten Verfahren umfasst. Auch ein mittels Computer lesbares Medium, auf dem ein Computerprogramm der genannten Art abgespeichert ist, ist Teil der Erfindung.

### KURZE BESCHREIBUNG DER ZEICHNUNGEN

Im Folgenden sind zur weiteren Erläuterung und zum besseren Verständnis mehrere beispielhafte Ausführungsformen der vorliegenden Erfindung unter Bezugnahme auf die beigefügten Zeichnungen näher beschrieben und erläutert. Es zeigt:
- Fig. 1: eine schematische Darstellung der Komponenten eines Fertigungssystems gemäß einer ersten beispielhaften Ausführungsform der vorliegenden Erfindung,
- Fig. 2: ein Flussdiagramm einer beispielhaften Ausführungsform eines erfindungsgemäßen Verfahrens,
- Fig. 3: ein Flussdiagramm einer weiteren beispielhaften Ausführungsform eines erfindungsgemäßen Verfahrens,
- Fig. 4: ein Flussdiagramm einer weiteren beispielhaften Ausführungsform der vorliegenden Erfindung,
- Fig. 5: eine schematische Darstellung einer Anzeige auf einem Monitor für einen User für ein erfindungsgemäßes Verfahren.
- Fig. 6: eine schematische Darstellung eines Bauraums einer Fertigungsanlage mit darin platzierten ersten Bauelementen,
- Fig. 7: eine weitere schematische Darstellung eines Bauraums einer Fertigungsanlage gemäß der Fig. 6, wobei die darin platzierten Bauteile anonymisiert sind,
- Fig. 8: eine schematische Darstellung einer Anzeige auf einem Monitor für einen User, in der ein Bauraum mit ersten Bauteilen und einem darin möglicherweise zu platzierenden weiteren Bauteil gezeigt ist,
- Fig. 9: eine schematische Darstellung entsprechend der Fig. 8, wobei das weitere Bauteil in den Bauraum der Fig. 8 integriert ist,

- Fig. 10: eine weitere schematische Darstellung, die denen in den Fig. 8 und 9 ähneln, wobei mehrere erste und zweite Bauteile in einem Bauraum einer Fertigungsanlage platziert sind,
- Fig. 11: eine weitere Darstellung eines virtuellen Bauraums mit ersten und zweiten Bauteilen in dem Bauraum einer Fertigungsanlage,
- Fig. 12: eine schematische Darstellung einer formelmäßigen Abstands- und Kostenberechung von Bauteilen in einem Bauraum,
- Fig. 13: eine schematische Übersicht über einzelne Elemente einer beispielhaften Ausführungsform eines Fertigungssystems gemäß der Erfindung und darin verwendeter Daten,
- Fig. 14: eine schematische Übersicht über verschieden Module eines erfindungsgemäßen Fertigungssystems,
- Fig. 15: eine weitere schematische Übersicht über verschieden Module eines erfindungsgemäßen Fertigungssystems,
- Fig. 16: eine weitere schematische Übersicht über Teile eines erfindungsgemäßen Fertigungssystems, und
- Fig. 17: eine schematische Übersicht eines möglichen Organisationsschemas verschiedener Soft- und Hardwaremodule, mit denen ein oder mehrer beispielhafte Ausführungsformen der vorliegenden Erfindung realisiert werden können.

### DETAILLIERTE BESCHREIBUNG BEISPIELHAFTER AUSFÜHRUNGSSFORMEN DER VORLIEGENDEN ERFINDUNG

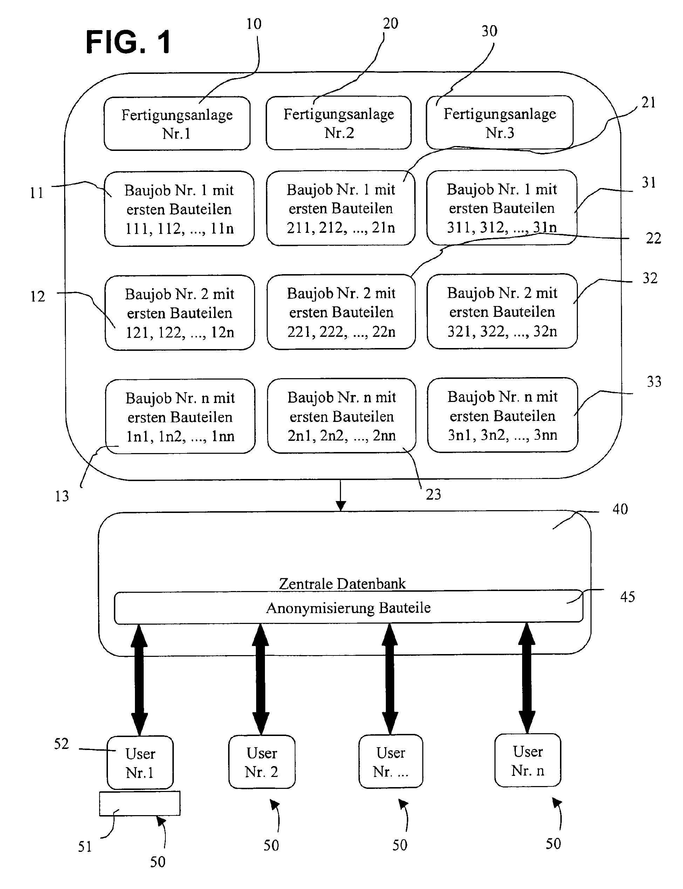

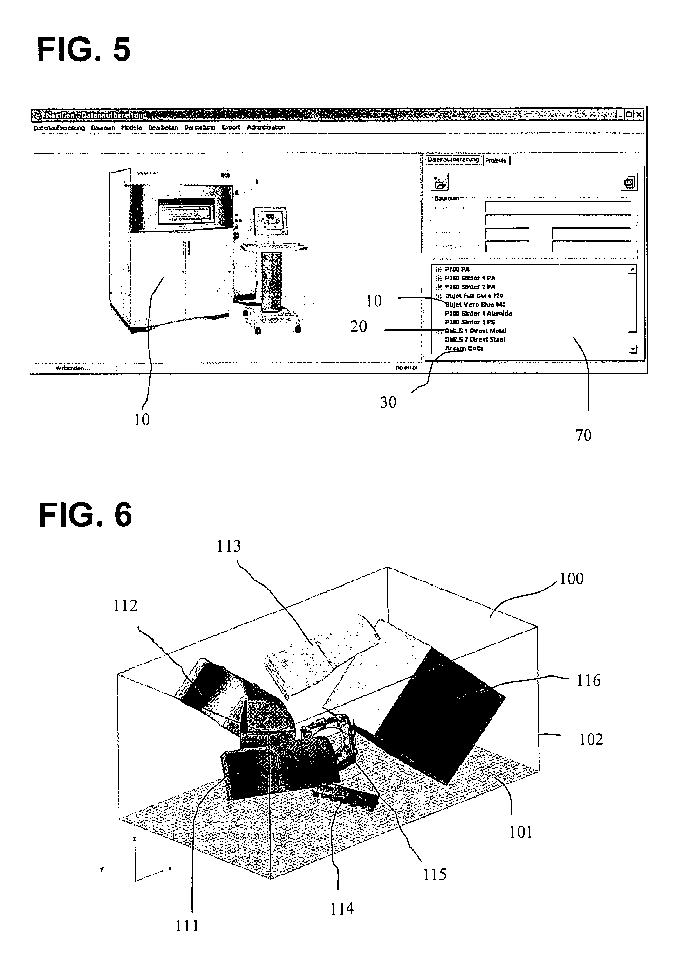

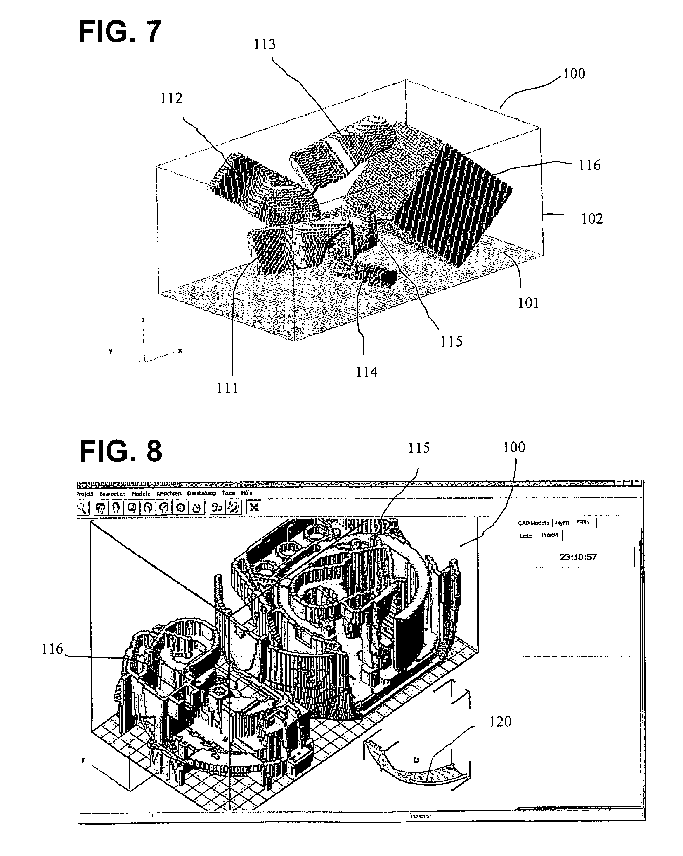

Unter Heranziehung der schematischen Darstellung der Fig. 1 wird eine erste beispielhafte Ausführungsform eines Fertigungssystems gemäß der vorliegenden Erfindung beschrieben. Das Fertigungssystem umfasst vier Fertigungsanlagen 10, 20, 30, die gleicher Bauart oder unterschiedlicher Bauart sein können. So kann die Fertigungsanlage 10 mit der Nummer 1 eine Rapid Manifacturing-Fertigungsanlage sein, die ein oder mehrere Bauteile in einem Bauraum 100 (siehe beispielsweise Fig. 6 oder 7) durch Erhärten einer Kunststoffmasse in Schichtbauweise erstellt. Die Fertigungsanlage 20, die hier die Nummer 2 hat, kann eine identische Maschine sein, sie kann aber auch eine Fertigungsanlage sein, die metallische Bauteile in einem Bauraum mittels Lasersintern oder Elektronenstrahlschmelzen erzeugt. Eine weitere Fertigungsanlage 30, die hier mit der Nr. 3 gekennzeichnet ist, kann beispielsweise eine an sich bekannte Druckanlage sein, die dreidimensionale Körper durch Bedrucken von Papier herstellt.

In der Fig. 1 sind jeder Fertigungsanlage 10, 20, 30 mehrere Baujobs 11-13, 21-23, 31-33 zugeordnet. Im vorliegenden Fall umfasst ein Baujob 11-13, 21-23, 31-33 einen Bauraum der jeweiligen Fertigungsanlage 10, 20, 30, in dem bestimmte Bauteile zu fertigen sind. Die in der Fig. 1 gewählte Nomenklatur bedeutet, dass in einem ersten Baujob Nr. 1, hier mit dem Bezugszeichen 11 gekennzeichnet, Bauteile 111, 112, ... 1 nn hergestellt werden. Die erste Ziffer bedeutet die Zuordnung zur Fertigungsanlage Nr. 1, die zweite Ziffer ist die Nummer des Baujobs dieser Fertigungsanlage mit der Nr. 1 und die dritte Ziffer ist die Durchnummerierung des in diesem Baujob zu erstellenden Bauteils (*n* ∈ *N*).

Anzumerken ist, dass herstellungsspezifische Daten wie Art des verwendeten Baumaterials etc. bekannt und der Fertigungsanlage zugeordnet sind. Entsprechend kann jedem Baujob 11-13, 21-23, 31-33, eine Zeit zugeordnet werden, zu dem dann die Herstellung aller in dem jeweiligen Baujob genannten und aufgelisteten Bauteile 111, 112, ... nnn erfolgt. Damit ist eine Übersicht über die Beladung der jeweiligen Fertigungsanlagen 10, 20, 30 für eine bestimmte Zeitspanne bekannt. Insbesondere ist auch bekannt, wie die Fertigungsanlagen 10, 20, 30 im Einzelnen bestückt ist. Außerdem sind auch alle Bauraum relevanten Daten, d.h. Größe und Platzierung der jeweiligen Bauteile 111, 112, ... bekannt.

Die den jeweiligen Baujob 11-13, 21-23, 31-33 repräsentierenden Daten werden in einer zentralen Datenbank 40 abgespeichert. Diese zentrale Datenbank 40 steht in Kommunikationsverbindung mit jeder Fertigungsanlage 10, 20, 30. Auf diese zentrale Datenbank 40 können verschiedene User 50 zugreifen. Insbesondere ist es möglich, dass die User 50, die hier potenzielle Auftraggeber sind, die jeweiligen Baujobs 11-13, 21-23, 31-33 visuell dargestellt bekommen, wozu jeder User 50 ein entsprechendes Terminal 51 mit Anzeige 52 zugeordnet ist. Die Kommunikation mit der zentralen Datenbank 40 kann wiederum über das Internet oder über andere bekannte Kommunikationswege erfolgen. Wie gezeigt, kann zudem ein Anonymisierungsmodul 45 vorhanden sein, das zur Veränderung der Bauteildaten dient und damit die bildliche Darstellung der Bauteile auf einer Anzeige 52 verändert.

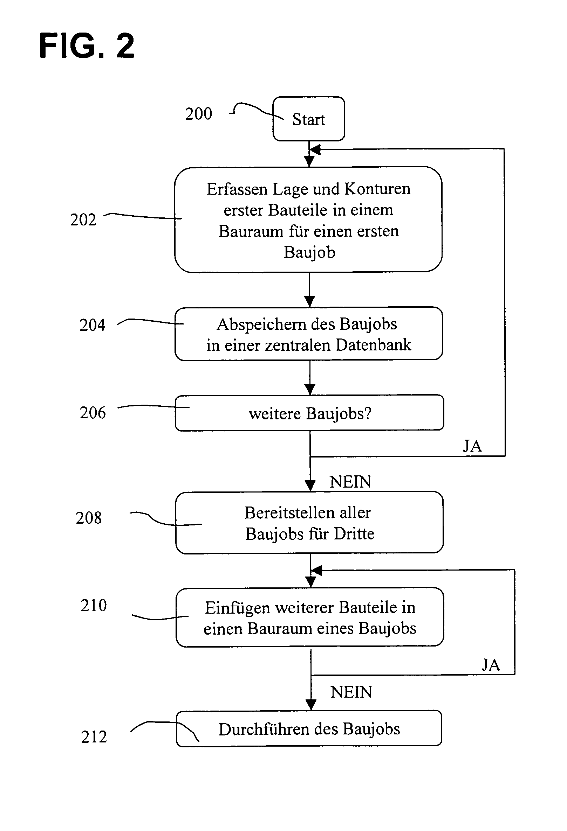

Unter Heranziehung der Fig. 2 wird nunmehr eine erste beispielhafte Ausführungsform eines erfindungsgemäßen Verfahrens erläutert. Mit dem Verfahrensschritt 200 wird der grundsätzliche Verfahrensablauf gestartet. Im Verfahrensschritt 201 werden die Lage und Konturen erster Bauteile in einem Bauraum für einen ersten Baujob 11-13, 21-23, 31-33 erfasst. Bei diesem Baujob 11-13, 21-23, 31-33 kann es sich um irgendeinen Baujob einer der Fertigungsanlagen 10, 20, 30 handeln. Mit anderen Worten wird also im Verfahrensschritt 202 eine Datenerfassung durchgeführt, die erste Bauteile, die in einer Fertigungsanlage 10, 20, 30 zu fertigen sind, umfassend erfasst. Sobald die ersten Bauteile für diesen Baujob 11-13, 21-23, 31-33 erfasst sind, wird dieser Baujob im Schritt 202 in der zentralen Datenbank 40 abgespeichert. Im weiteren Verfahrensschritt 204 erfolgt die Abfrage, ob weitere Baujobs 11-13, 21-23, 31-33 vorliegen. Sind weitere Baujobs vorhanden, so wird nochmals die Sequenz der Verfahrensschritte 202 bis 204 durchlaufen. Ansonsten werden die vorhandenen Baujobs in der Datenbank 40 abgespeichert.

Sind alle Baujobs 11-13, 21-23, 31-33 abgearbeitet, so werden diese Baujobs über die zentrale Datenbank 40 Dritten, also den Usern 50, in irgendeiner Form auf elektronischem Weg zur Verfügung gestellt. Damit ist gemeint, dass User 50 auf diese Daten der zentralen Datenbank 40 zugreifen können und sich insbesondere in beispielhaften Ausführungsformen den jeweiligen Baujobs mit den darin befindlichen ersten Bauteilen auch visuell in 3D-Darstellung fernab der eigentlichen Fertigungsstätte mit den Fertigungsanlagen 10, 20, 30 auf einem Monitor darstellen können und insbesondere auch virtuell diese Bauräume der einzelnen Baujobs 11-13, 21-23, 31-33 aus verschiedenen Perspektiven begutachten können, so dass insbesondere auch die Lage und die Konturen der ersten Bauteile in den jeweiligen Bauräumen für den User 50 erkennbar sind. Erstmals wird also einem User 50 die Möglichkeit gegeben, in bestehende Baujobs 11-13, 21-23, 31-33 weitere Bauteile, die für den User 50 herzustellen sind, in den jeweiligen Bauraum des jeweiligen Baujobs einzufügen. Dieser Einfügeschritt ist im Ablaufdiagramm gemäß der Fig. 2 mit dem Bezugszeichen 210 gekennzeichnet. Hat der User 50 also alle seine weiteren Bauteile in den jeweiligen Baujobs untergebracht, so wird dann der jeweilige Baujob 11-13, 21-23, 31-33 durchgeführt und die ersten und weiteren Bauteile in der Fertigungsanlage 10, 20, 30 hergestellt. Nach dem Einfügen eines weiteren Bauteils im Schritt 210 wird, falls noch weitere Bauteile in weiteren Baujobs oder dem gleichen Baujob einzufügen sind, nochmals diese Einfügesequenz 210 durchlaufen.

Der grundsätzliche Vorteil der vorliegenden Erfindung kann darin bestehen, dass erstmals Baujobs 11-13, 21-23, 31-33 für potenzielle Auftraggeber, also User 50, verfügbar sind und von den Usern 50 geprüft werden kann, ob weitere Bauteile in einen Baujob 11-13, 21-23, 31-33 eingefügt werden können, was die Herstellungszeiten für die weiteren Bauteile reduzieren kann und auch den Vorteil haben kann, dass der User 50 nicht abwarten muss, bis alle Baujobs für die jeweilige Fertigungsanlage 10, 20, 30 abgearbeitet sind und er dann einen neuen Baujob initiiert.

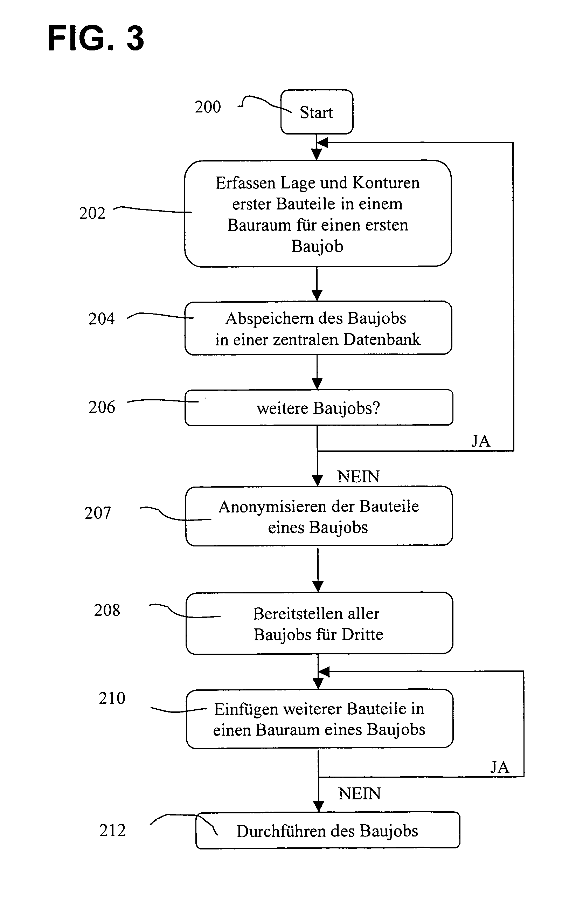

Eine weitere beispielhafte Ausführungsform der vorliegenden Erfindung ist in der Fig. 3 in Form eines Flussdiagramms gezeigt. Grundsätzlich entspricht das Flussdiagramm gemäß der Fig. 3 dem der Fig. 2. Allerdings ist der Zwischenschritt 207 eingefügt, der dem Bereitstellen aller Baujobs für User 50 gemäß dem Verfahrensschritt 208 vorgeschaltet ist. Zur Vermeidung unnötiger Wiederholungen wird in Bezug auf die Verfahrensschritte 202, 204, 206, 208, 210 und 212 auf die obigen Ausführungen in Bezug auf die Fig. 2 verwiesen.

Gemäß der Fig. 3 wird also, nachdem im Schritt 206 abgefragt wurde, ob weitere Baujobs gemäß den Verfahrensschritten 202, 204 abgearbeitet werden sollen, ein Anonymisierungsschritt 207 durchgeführt. Ein Anonymisierschritt umfasst das irgendwie geartete Verändern der ersten Bauteile eines Baujobs 11-13, 21-23, 31-33 einer Fertigungsanlage 10, 20, 30 vor dem Bereitstellen dieser Baujobs für irgendwelche User 50, also insbesondere externe User 50. Das Verändern der Daten der Bauteile soll verhindern, dass die User 50 relevante Kenntnisse über die ersten Bauteile eines Baujobs 11-13, 21-23, 31-33 erhalten. Beispielsweise wird ein Anonymisieren durch Voxeln durchgeführt. Im Hinblick auf das Voxeln kann beispielsweise auf die Diplomarbeit Nr. 1662, Generierung, Darstellung und Interaktion mit Voxel, Stefan Häuser, 1998, Universität Stuttgart, Fakultät Informatik, verwiesen werden. Im Übrigen ist weitere Fachliteratur zu dem Thema Voxeln erhältlich. Durch das Voxeln werden Volumen umfassende Bauteile eines Baujobs in einzelne nebeneinander liegende dreidimensionale Würfel, Rechteck oder irgend eine andere geometrische Form umfassende Voxel (Teilvolumina) aufgesplittet, so dass schlussendlich in der Ansicht für einen User 50 nur noch sehr grobe Umrisse dieser Bauteile in einem Baujob visuell dargestellt werden und damit auch Details über diese ersten Bauteile eines Baujobs für einen fremden User 50, der nicht Auftraggeber für diese Baujobs und die darin enthaltenen Bauteile ist, nicht verfügbar sind. Das Anonymisieren kann auch beispielsweise durch Schaffen einer Umhüllung um das zu erstellende Bauteil erzielt werden, so dass nur noch deren Lage und äußerst grobe Kontur des Bauteils für User 50 erkennbar ist. Entsprechende mathematische Verfahren sind für einen hier heranzuziehenden Fachmann hinlänglich bekannt und brauchen nicht weiter erläutert werden.

In der beispielhaften Ausführungsform eines erfindungsgemäßen Verfahren, wie es in Fig. 3 veranschaulicht ist, wird also entgegen dem Verfahren gemäß der beispielhaften Ausführungsform der Fig. 2 nicht jedes erste Bauteil in einem Baujob einem User 50 visuell in allen Details gezeigt, sondern nur deren grobe Kontur oder Umhüllung, so dass der potenzielle Auftraggeber 50 für weitere Bauteile keine Kenntnisse über Details der ersten Bauteile eines jeweiligen Baujobs erhält. Alles andere bleibt gleich. Trotz des Anonymisierungsschrittes 207 gemäß der beispielhaften Ausführungsform der Fig. 3 ist es einem potentiellen Auftraggeber 50 möglich, weitere Bauteile in ein oder mehrere Baujobs 11-13, 21-23, 31-33 einzufügen, bevor diese Baujobs 11-13, 21-23, 31-33 dann ausgeführt werden und damit alle ersten und zweiten Bauteile eines Baujobs in einer Fertigungsanlage 10, 20, 30 gefertigt werden.

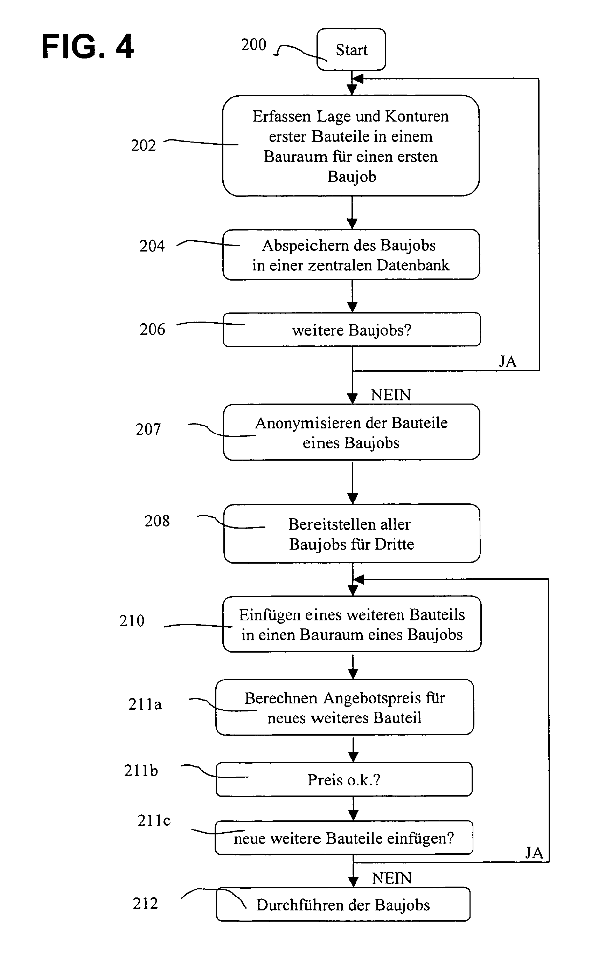

Eine weitere beispielhafte Ausführungsform eines erfindungsgemäßen Verfahrens ist in der Fig. 4 in Form eines Flussdiagramms dargestellt. Der grundsätzliche Aufbau dieses Verfahrens entspricht dem in der Fig. 3 in Form eines Flussdiagramms dargestellten Verfahrens. Allerdings sind die Verfahrensschritte 211a-211c zwischen die bekannten Verfahrensschritte 210 und 212 eingefügt. Zur Vermeidung unnötiger Wiederholungen wird in Bezug auf die bekannten und mit den gleichen Bezugszeichen versehenen Verfahrensschritte des Flussdiagramms der Fig. 4 auf die entsprechenden Ausführungen zu der Fig. 3 verwiesen.

Bei diesem Ausführungsbeispiel gemäß der Fig. 4 wird im Schritt 211a ein Angebotspreis für das neue weitere Bauteil unter Berücksichtigung der in dem gleichen Baujob 11-13, 21-23, 31-33 zu fertigenden ersten Bauteile erstellt. Damit wird erstmals einem User 50 die Möglichkeit gegeben, einen aktuellen Angebotspreis für ein weiteres Bauteil, das der User 50 in einen bestehenden Baujob 11-13, 21-23, 31-33 integriert, zu erhalten, wobei bei der Preisfindung alle in dem Baujob herzustellenden Bauteile berücksichtigt sind. Auf Grund der Tatsache, dass in einem Baujob 11-13, 21-23, 31-33 nunmehr anstatt nur der ersten Bauteile auch ein oder mehrere weitere Bauteile gefertigt werden, sind die Gesamtherstellungskosten günstiger als wenn nur das eine neue weitere Bauteil gefertigt würde. Falls erwünscht, kann also der Dienstleister einen Anteil oder den gesamten Teil der günstigeren Fertigungskosten an den weiteren User 50, der das neue weitere Bauteil in Auftrag gibt, weitergeben.

Im Schritt 211 b wird der User 50 aufgefordert, einzugeben, ob der Angebotspreis für das neue weitere Bauteil akzeptabel ist. Falls dies der Fall ist, wird im Schritt 211c abgefragt, ob noch ein neues weiteres Bauteil in den oder einen ändern Baujob einzufügen ist. Wird dies verneint, werden nunmehr der oder die Baujobs gemäß dem Schritt 212 durchgeführt und nunmehr auch die oder das weitere Bauteil in dem jeweiligen Baujob erstellt.

Falls im Schritt 211 b die Abfrage damit endet, dass der Angebotspreis nicht in Ordnung ist, wird das im Schritt 211 a eingegebene neue weitere Bauteil wieder aus dem virtuellen Baujob entfernt und in der zentralen Datenbank in unveränderter Form abgespeichert, so dass andere User 50 den ursprünglichen Bauraum mit den darin ursprünglich eingestellten ersten Bauteilen zu sehen bekommen. Falls das neue weitere Bauteil eingefügt wurde, indem im Schritt 211b der Preis als akzeptabel angegeben wurde, wird weiteren Usern 50 dieser Baujob mit den ersten Bauteilen und dem neuen eingefügten weiteren Bauteil visuell dargestellt.

Ergänzend ist noch anzumerken, dass für alle vorgenannten Ausführungsbeispiele eines erfindungsgemäßen Verfahrens gilt, dass die Baujobs 11-13, 21-23, 31-33 nur bis zu einer begrenzten Zeitspanne in der Datenbank 40 für weitere User 50 zur Verfügung gestellt werden, schlussendlich bis die Fertigung beginnt. Dann werden diese Baujobs, die dann wirklich bereits in Bearbeitung sind und in die keine weiteren Bauteile mehr eingefügt werden können, aus der Datenbank 40 entfernt.

Die Fig. 5 ist eine beispielhafte Ausführungsform einer Anzeige auf einem Monitor 52, wie die Abfrage in den Flussdiagrammen der Fig. 2 bis 4 in Bezug auf eine Fertigungsanlage 10, 30, 40 für einen User 50 aussehen könnte. So wird gemäß der Fig. 5 in der Anzeige 52 eine Fertigungsmaschine 10 gezeigt und in der Infobox 70 eine Auswahl an zur Verfügung stehenden Fertigungsanlagen 10, 20, 30 angezeigt. Durch Anklicken einer der Fertigungsanlagen 10, 20, 30 etc. kann dann ein User 50 die von ihm gewünschte Fertigungsanlage 10, 20, 30 auswählen. Nachdem dieser Auswahlvorgang stattgefunden hat, werden ihm die jeweiligen Baujobs 11-13, 21-23, 31-33 der jeweiligen Fertigungsmaschine 10, 20, 30 angezeigt.

Die Fig. 6 veranschaulicht in schematischer Weise in dreidimensionaler perspektivischer Ansicht einen Bauraum 100 einer Fertigungsanlage 10. Hier hat der Bauraum 100 einen rechteckförmigen Grundriss 101 und eine bestimmte Höhe 102. Dieser Bauraum 100 umfasst darin zu erstellende erste Bauteile 111-116. Auf Grund des jeweiligen Fertigungsverfahrens können diese ersten Bauteile 111-116 irgendeine Lage innerhalb der Bauraumgrenzen des Bauraums 100 haben. Die Lage der ersten Bauteile 111-150 in dem Bauraum 100 wird beispielsweise hier über ein kartesisches Koordinatensystem festgelegt. Dazu hat jedes Bauteil 111-116 in dem kartesischen Koordinatensystem x, y, z, festgelegte Koordinaten. Die eingangs angesprochenen digitalen Bauteildaten in Bezug auf die Lage können selbstverständlich von dem jeweiligen gewählten Koordinatensystem abhängen. Üblicherweise wird dies aber wohl ein kartesisches Koordinatensystem sein. Es ist aber festzustellen, dass auch andere Koordinatensysteme ohne weiteres zur Festlegung der Lage der jeweiligen Bauteile 111-116 verwendet werden können.

Die Fig. 6 zeigt einen Bauraum 100 einer der Fertigungsanlagen 10, 20, 30. Allerdings repräsentiert diese Darstellung einen Baujob, bei dem keine, wie eingangs unter Bezugnahme auf die Fig. 1 erwähnt, Anonymisierung durchgeführt wurde. Der angezeigte Baujob umfasst den Bauraum 100 mit den darin befindlichen ersten Bauteilen 111-116.

In der Fig. 7 ist ein Baujob gemäß der Fig. 6 gezeigt, jedoch sind die darin befindlichen ersten Bauteile 111-116 gemäß dem Verfahrensschritt 207 (siehe obige Ausführungen zu den Fig. 3 und 4) anonymisiert. Hier ist die Anonymisierung durch die Rasterung oder das Voxeln der Bauteile 111-116 erfolgt. Wie in der Fig. 7 im Vergleich zu der Fig. 6 ersichtlich ist, sind die einzelnen Bauteile 111-116 nicht mehr in ihren Details erkennbar, sondern nur noch deren grobe Umrissform. Dadurch werden keine von den jeweiligen Auftraggebern der ersten Bauteile 111-116 als geheim erachteten Einzelheiten an Unberechtigte weitergegeben.

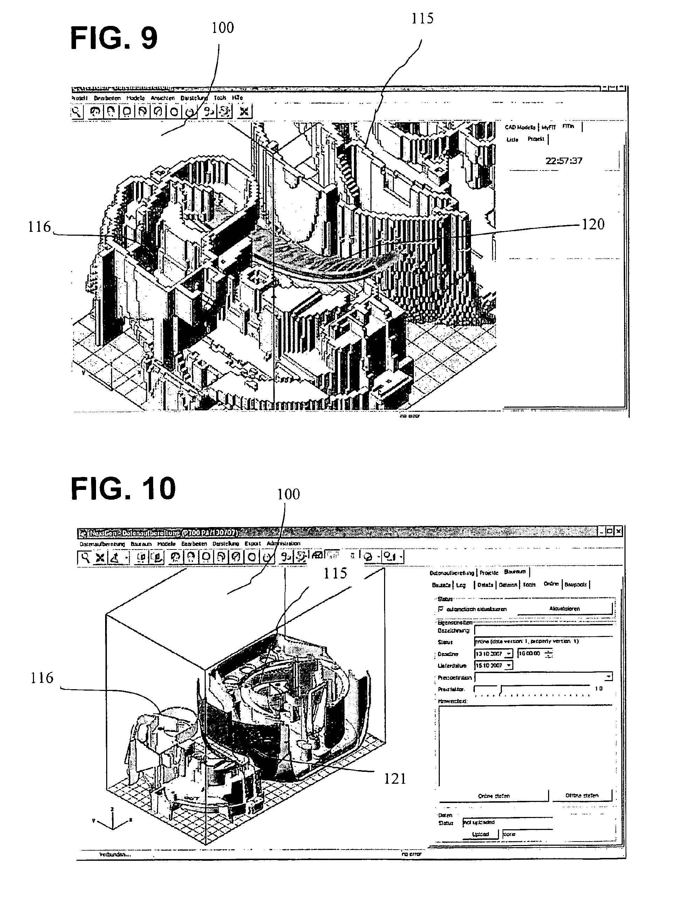

Die Fig. 8 zeigt nunmehr eine Ansicht auf einem Monitor 52 eines Bauraums bzw. eines Baujobs gemäß dem Verfahrensschritt 208 (siehe Ausführungen zur Fig. 2). Bei der in der Fig. 8 gezeigten Ansicht hat der User 50 Zugang zu allen Details der ersten Bauteile 111. Eine Anonymisierung ist hier nicht erfolgt. Sie könnte aber gemäß der Fig. 7 ohne weiteres noch vorgeschaltet werden. In der Fig. 8 ist auch das vom User 50 gewünschte und in Auftrag zu gebende weitere Bauteil 120 dargestellt, das nun der User 50 versucht, in den virtuellen Baujob gemäß der Fig. 8 einzufügen. Eine derartige Ansicht des eingefügten weiteren Bauteils 120 in den Bauraum 111 ist in der Fig. 9 gezeigt.

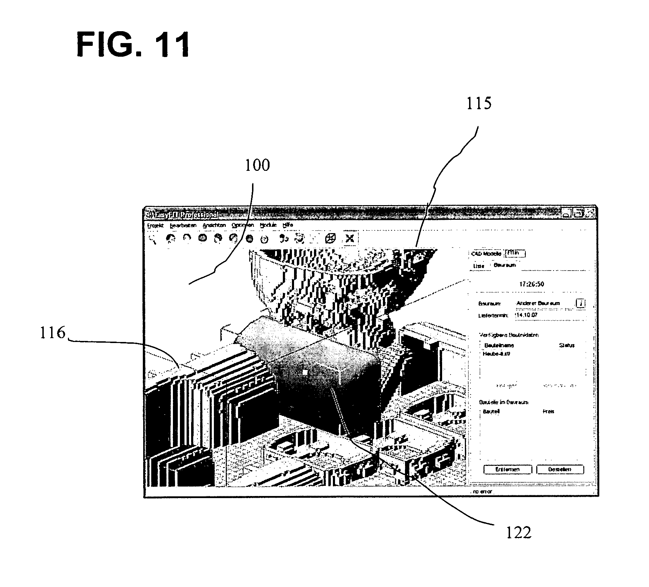

Die Fig. 10 zeigt eine ähnliche Ansicht gemäß den Fig. 8 und 9, hier ist ein anderes weiteres Bauteil 121 zwischen zwei erste Bauteile 111 eingefügt. Die Darstellung der Fig. 11 entspricht der der Fig. 10, hier ist wiederum ein anderes Bauteil 122 als weiteres Bauteil zwischen ersten Bauteilen 111 von einem User eingefügt. Damit symbolisiert die Darstellung gemäß der Fig. 11 einen anderen Baujob als die Fig. 8 bis 10.

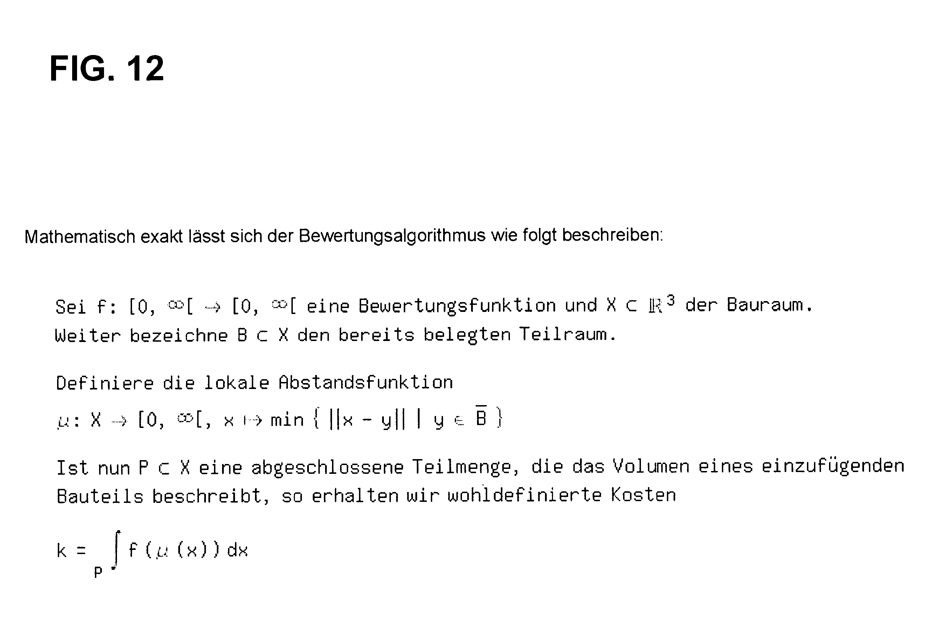

Die Fig. 12 bezieht sich auf eine beispielhafte Bewertungsfunktion zur Berechnung von Herstellungskosten eines oder mehrerer Bauteile. Hier wird der Bauraum 100 in einzelne Zellen unterteilt. Jeder Zelle wird ein Wert zugeordnet. Der Wert einer freien Zelle, also eine Zelle, in der sich kein Teil eines Bauteils befindet, wird umso höher angesetzt, je weiter diese freie Zelle von einem Bauteil beziehungsweise dessen Außenkontur beabstandet ist. Die Summe aller Zellen gibt dann einen Wert, anhand dessen u.a. die Herstellkosten eines Bauteils, die Prozesssicherheit etc. hergeleitet werden können. Je niedriger die Summe aller Werte aller Zellen eines Bauraums, umso niedriger sind z.B. auch die Herstellkosten pro Bauteil, da der Beladungsgrad des Bauraums optimiert ist.

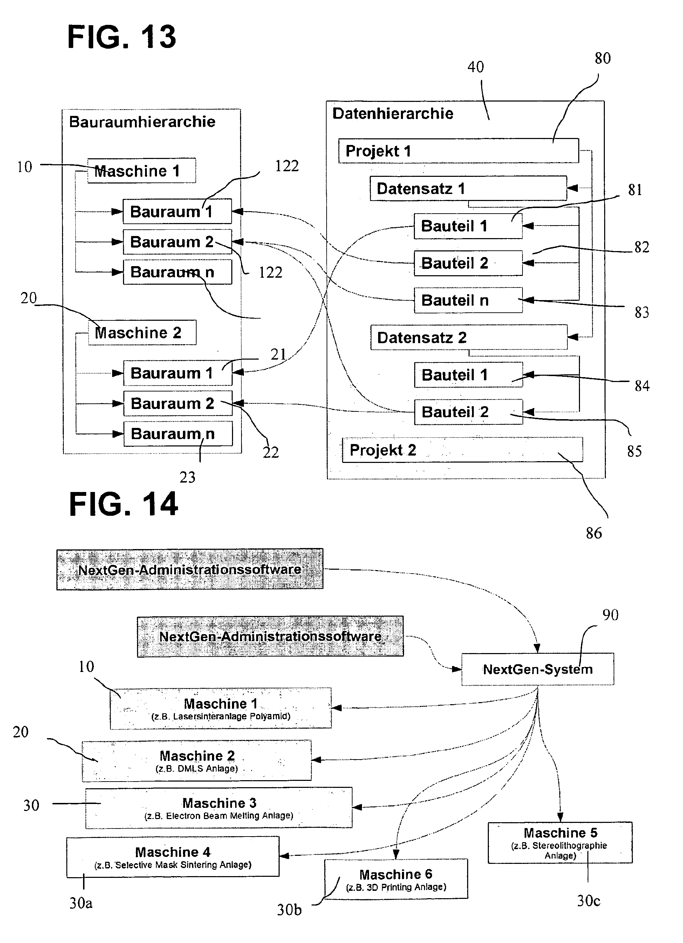

Eine weitere schematische Darstellung der Bestandteile und Daten des in der Fig. 1 gezeigten Ausführungsbeispiels einer Fertigungsanlage gemäß der vorliegenden Erfindung ist in der Fig. 13 dargestellt. Hier ist eine Maschine 1 vorhanden, die Bauräume 1, 2...n umfasst. Hier sind die Bauräume 1, 2...n mit den Baujobs, wie sie eingangs erwähnt wurden, identisch. Eine Maschine 2 umfasst virtuelle Bauräume 1, 2...n, die wiederum verschiedene Baujobs gemäß obigen Ausführungsformen der Fertigungslange 2 haben. Die rechte Seite gemäß der Darstellung der Fig. 13 zeigt einen Teil der Datenbank 40. So müssen gemäß einem Projekt 80 Bauteile 1, 2...n, hier mit den Bezugszeichen 81-85 gekennzeichnet, gefertigt werden. Vom Inhaber der Fertigungsanlagen 10, 20 werden diese Bauteile 81-85 auf die verschiedenen Bauräume 11, 12, 13, 21, 22, 23 verteilt und dann, wie in Fig. 1 symbolisch gezeigt, in der zentralen Datenbank 40 abgelegt, wo sie für User 50 verfügbar sind (anonymisiert oder auch nicht anonymisiert, je nach User und/oder in Abhängigkeit vom Baujob 11, 12, 13, 21, 22, 23).

Die Fig. 14 symbolisiert das Gesamtsystem einer solchen Fertigungsanlage mit der entsprechenden Software. Die Fertigungsanlagen sind hier mit den Bezugszeichen 10, 20, 30, 30a-30c gekennzeichnet. Alle Fertigungsanlagen 10, 20, 30, 30a-30c sind verschieden. So handelt es sich bei der Fertigungsanlage 10 um eine Lasersinteranlage für Polyamid. Die Fertigungsanlage 20 ist eine DMLS-Anlage. Bei der Fertigungsanlage 30 handelt es sich um eine Electro Beam Melting Anlage. Die Fertigungsanlage 30a ist eine Selective Masque Sintering Anlage. Weiter handelt es sich bei der Fertigungsanlage 30b um eine 3D Printing Anlage. Schließlich ist die Fertigungsanlage 30c eine Stereolithographieanlage, wie sie hinlänglich bekannt sind. Alle diese Fertigungsanlagen 10, 20, 30, 30a-30c sind mit Hilfe einer Administrationssoftware in einem Gesamtsystem 90 angeschlossen, in der auch die Datenbank 40 integriert ist.

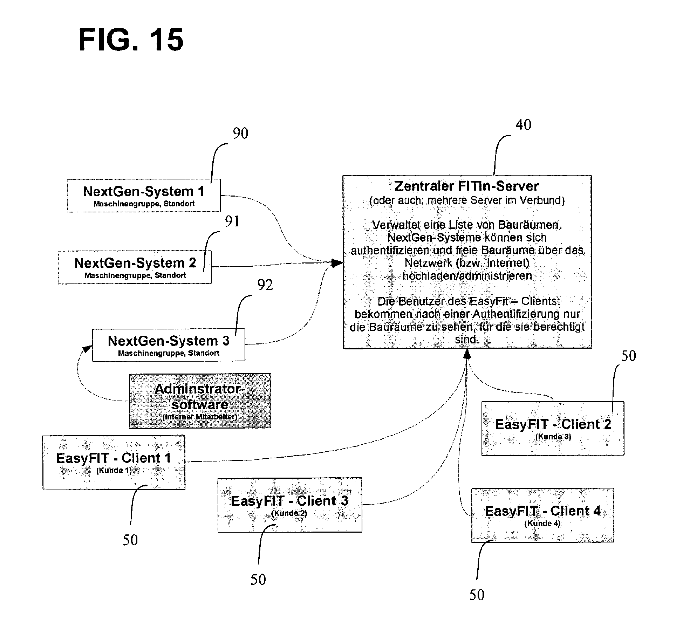

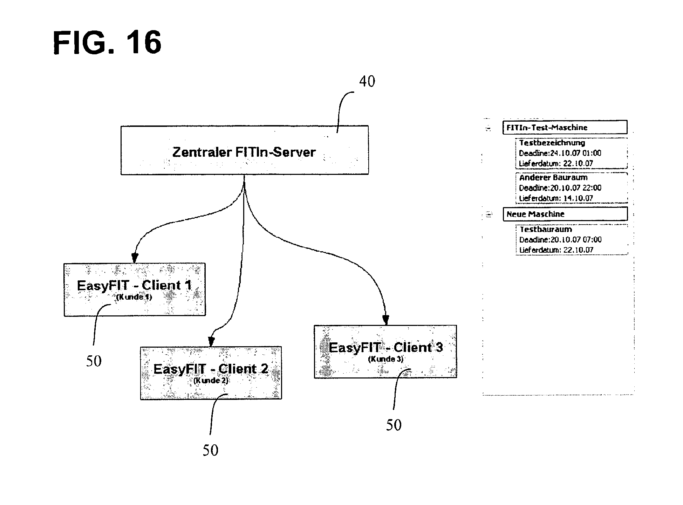

Die weiteren Fig. 15 und 16 veranschaulichen nur die grundlegende Netzwerkstruktur. In der Fig. 15 ist die zentrale Datenbank 40 auf einem hier als "FITin-Server" bezeichneten Server vorhanden. Dieser zentrale FITin-Server mit Datenbank 40 ist mit mehreren NextGen-Sytemen 90, 91, 92 verbunden. Wie unter Bezugnahme auf die Fig. 14 bereits erläutert wurde, ist jedes NextGen-System 90, 91, 92 an verschiedene Maschinen bzw. Fertigungsanlagen 10, 20, 30, 30a-30c angeschlossen. Jedes NextGen-System 90, 91, 92 schafft die Soft- und Hardware technischen Vorraussetzungen, die maschinenspezifischen Daten der einzelnen Fertigungsanlagen 10, 20, 30, 30a-30c zu verwalten und die ersten Bauteile 111-116 in den einzelnen Bauräumen bzw. Baujobs zu platzieren. Üblicherweise kann somit das NextGen-Sytstem bei Dienstleitern vorhanden sein, da jedes NextGen-System 90, 91, 92 in starkem Maße von den damit verbundenen Fertigungsanlagen 10, 20, 30, 30a-30c abhängig ist. Grundsätzlich ist es aber auch möglich, die entsprechende Software vom Dienstleiter auf einen anderen Server auszulagern.

Schlussendlich werden gemäß der Fig. 15 von jedem NextGen-System 90, 91, 92 die jeweiligen Baujobs, wie sie zuvor eingehend erläutert wurden, auf den zentralen FITin-Server mit Datenbank 40 übermittelt, auf den dann wiederum verschiedene, hier als "EasyFIT-Clients" bezeichneten User 50 Zugriff haben. Mittels der den jeweiligen Usern 50 zugeordneten Terminals haben die User 50 die Möglichkeit, in die Baujobs, die auf der zentralen Datenbank 40 abgespeichert sind, weitere Bauteile 120, 121, 122 einzufügen.

Dieser Vorgang ist insbesondere in der Fig. 16 nochmals schematisch dargestellt. So werden hier von dem zentralen FITin-Server mit Datenbank 40 jedem EasyFIT-User 50 die jeweils verfügbaren Baujobs übermittelt, was in der rechten Box 41 symbolisiert ist.

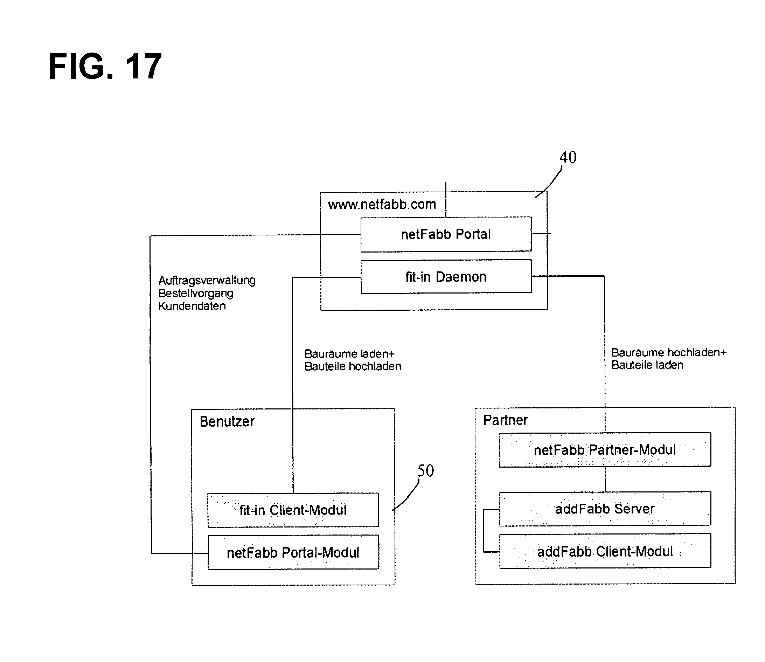

Schließlich zeigt die Fig. 17 den schematischen beispielhaften Aufbau und das Zusammenarbeiten verschiedener Module und Server, mit denen beispielhafte Ausführungsform eines erfindungsgemäßen Fertigungssystems realisiert werden können. Das hier gezeigte System ist in drei trennbare Bereiche gegliedert:
1. Benutzer Der Benutzer (Auftraggeber der User 50) hat ein Terminal 51 mit einem hier als "FITin Client Programm" bezeichneten Programm. Mit Hilfe des Terminals 51 bezieht der User 50 über z.B. eine Internetverbindung von einem "FITin Dämon" einen "online" gestellten Bauraum (Baujob) sowie eine Bewertungsfunktion zu diesem Bauraum. Der User 50 platziert seine zu erstellenden Bauteile an den freien Stellen des Bauraums. Ein "FITin Client Programm" errechnet die Baukosten durch eine Bewertungsfunktion (siehe z.B.Fig 12). Die Bauteildaten sowie die Transformationsmatrix der Position und die berechneten Kosten werden z.B. über das Internet an den FITin Dämon übertragen. In vorbestimmten zeitlichen Abständen (z.B. wenigen Sekunden oder Minuten) prüft das FITin Client Programm, ob eine neue Versionsnummer des Bauraums erhältlich ist. Falls ja, wird eine neue Version geladen. Die Bestellung und Auftragsverwaltung findet klassisch über ein Webportal statt. Dieses kann in das FITin Client Programm integriert sein.
2. Internetserver Auf einem Server im Internet läuft ein Webportal zur Abwicklung der kommerziellen Vorgänge wie Bestellung, Rechnungsstellung, Auftragsbestätigung, Zufriedenheitsbewertung etc. Auf diesem Server läuft ein FITin Dämon Prozess, der auf Anfrage online Bauräume und Bewertungsfunktionen an registrierte FITin Clients sendet. Diese Bauräume und Bewertungsfunktionen erhält der FITin Dämon von einem berechtigten, d.h. freigegebenen "addfabb-netfabb"-Partnermodul. Wird ein Bauteil vom Benutzer gesendet, so prüft der Client ob die Kostenberechnung richtig war und ob dieser Bauraum noch tatsächlich frei ist. Das gesendete Bauteil wird an den Partner gesendet. Das Bauteil wird auch anonymisiert und in den Baujob eingefügt. Die Baujob-Versionsnummer wird um eins erhöht und der jetzt aktuelle Baujob wird an alle angeschlossenen FITinClients verteilt.
3. Partner Im Regelfall ist ein Partner ein Anlagenbetreiber und das addfabb-Programm ist direkt mit dem Fertigungssystem verbunden. Um eine Vielzahl von Bauteilen über mehrere Mitarbeiter, mehrere Anlagen und einen langen Zeitraum effizient bedienbar zu machen, ist die addFabb-Software als Client/Server Programm ausgerührt. Über ein addFabb-Client Programm werden vom Betreiber erste Bauteile in dem Bauraum platziert und eine Bewertungsfunktion definiert. Diese Bauräume können vom Partner online gestellt werden und werden dann anonymisiert an den FITin Dämon gesendet. Von Benutzern eingefügte Bauteile erscheinen beim Partner ohne Anonymisierung im Bauraum. Bauteile, die vom Partner selbst in den Bauraum hinzugefügt werden, während ein Bauraum online steht, werden mit dem FITin Dämon synchronisiert, so dass auf dem FITin Dämon immer eine aktuelle Version des Bauraums verfügbar ist.

## Patentansprüche

1. Verfahren zum Herstellen von mindestens einem ersten und mindestens einem weiteren Bauteil (120, 121, 122) in einer Fertigungsanlage (10, 20, 30), die einen definierten Bauraum (100) zum Fertigen von mehreren Bauteilen (111-116, 120-122) hat, umfassend:
- Bereitstellen von digitalen ersten Bauteildaten, die die Lage und die Konturen des mindestens einen ersten Bauteils (111-116), das sich in dem Bauraum (100) befindet, repräsentieren,
- Bereitstellen von den Bauraum (100) repräsentierenden digitalen Bauraumdaten,
- Übersenden der digitalen ersten Bauteildaten und der digitalen Bauraumdaten zum Visualisieren des mindestens einen ersten Bauteils (111-116) in dem Bauraum (100) für einen potentiellen Auftraggeber (50),
- Empfangen von digitalen weiteren Bauteildaten, die mindestens ein weiteres Bauteil (120-122) und dessen Lage in dem Bauraum (100) repräsentieren, von dem potentiellen Auftraggeber (50), wobei die digitalen weiteren Bauteildaten **dadurch** generiert wurden, dass das mindestens eine weitere, noch nicht in Auftrag gegebene Bauteil (120-122) in dem definierten Bauraum (100) auf der Grundlage der Visualisierung des mindestens einen ersten Bauteils (111-116) und dessen Lage in dem definierten Bauraum (100) platziert wurde,
- Fertigen des mindestens einen weiteren Bauteils (120, 121, 122) und des mindestens einen ersten Bauteils (111-116) zur gleichen Zeit in dem gleichen Bauraum (100) einer Fertigungsanlage (10, 20, 30).

2. Verfahren nach Anspruch 1, mit den weiteren Verfahrensschritten:
- Visualisieren des definierten begrenzten Bauraums (100) und des darin platzierten mindestes einen ersten Bauteils (111-116) einem potentiellen Auftraggeber (50),
- Virtuelles Anordnen des mindestens einen weiteren, noch nicht in Auftrag gegebenen Bauteils (120-122) in dem definierten Bauraum (100) mit dem darin befindlichen mindestens einen ersten Bauteil (111-116),
- Erfassen der digitalen weiteren Bauteildaten des mindestens einen weiteren Bauteils (120-122) in dem Bauraum (100), und
- Übermitteln der digitalen Bauteildaten des mindestens einen weiteren Bauteils (120-122) an den Betreiber der Fertigungsanlage (10, 20, 30).

3. Verfahren nach Anspruch 1 oder 2, mit dem weiteren Verfahrensschritt des rechnergestützten Prüfens, ob der verbleibende Freiraum in dem definierten Bauraum (100) der Fertigungsanlage (10, 20, 30) ausreicht, das mindestens eine weitere Bauteil (120, 121, 122) zu fertigen.

4. Verfahren nach einem der voranstehenden Ansprüche, mit dem weiteren Verfahrensschritt des Anonymisierens (207) des mindestens einen ersten Bauteils (111-116).

5. Verfahren nach einem der voranstehenden Ansprüche, mit dem weiteren Verfahrensschritt des Festlegens der Berechtigung des Zugriffs auf die digitalen ersten Bauteildaten und Bereitstellen dieser digitalen ersten Bauteildaten nur dem Auftraggeber dieser Bauteile (111-116).

6. Verfahren nach einem der voranstehenden Ansprüche, mit dem weiteren Verfahrensschritt des Visualisierens des definierten begrenzten Bauraums (100) und der darin platzierten ersten Bauteile (111-116) in anonymisierter Form dem potentiellen Auftraggeber (50), der nicht Auftraggeber des mindestens einen ersten Bauteils (111-116) ist.

7. Verfahren nach einem der voranstehenden Ansprüche, mit den weiteren Verfahrensschritten:
- Ermitteln aller ersten Bauteile (111-116) und aller weiteren Bauteile (120, 121, 122), und
- Neuberechnen der Herstellungskosten jedes einzelnen Bauteils (111-116,120, 121, 122), das in dem definierten Bauraum (100) der Fertigungsanlage (10, 20, 30) zu fertigen ist, berücksichtigend alle ermittelten ersten und weiteren Bauteile (111-116, 120, 121, 122).

8. Verfahren nach einem der voranstehenden Ansprüche, mit den weiteren Verfahrensschritten:
- Anbieten mehrerer Fertigungsanlagen (10, 20, 30) einem potentiellen Auftraggeber (50), und
- Auswählen einer bestimmten Fertigungsanlage (10, 20, 30) aus der Vielzahl von Fertigungsanlage (10, 20, 30) durch den potentiellen Auftraggeber (50).

9. Verfahren nach einem der voranstehenden Ansprüche, mit dem weiteren Verfahrensschritts des Auswählens eines bestimmten Bauraums (100) aus einer Mehrzahl von Bauräumen (11-13, 21-23, 31-33) einer bestimmten Fertigungsanlage (10, 20, 30).

10. Anonymisierungsverfahren zur Verwendung in einem Verfahren zum Herstellen von mindestens einem ersten und mindestens einem weiteren Bauteil (120, 121, 122) in einer Fertigungsanlage (10, 20, 30), die einen definierten Bauraum (100) zum Fertigen von unterschiedlichen Bauteilen hat, mit den Verfahrensschritten:
- Bereitstellen von digitalen ersten Bauteildaten, die die Lage und die Konturen des mindestens einen ersten Bauteils (111-116) in dem Bauraum (100) repräsentieren,
- rechnergestütztes Anonymisieren der Konturen des mindestens einen ersten Bauteils (111-116), **dadurch** dass die digitalen ersten Bauteildaten derart verändert werden, dass zumindest die Konturen des mindestens einen ersten Bauteils (111-116) und **dadurch** die Visualisierung des mindestens einen ersten Bauteils (111-116) verändert werden,
- Bereitstellen der veränderten digitalen ersten Bauteildaten für potentielle Auftraggeber (50), die nicht Auftraggeber des mindestens einen ersten Bauteils (111-116) sind.

11. Anonymisierungsverfahren nach Anspruch 10, in dem das Anonymisieren der Konturen der ersten Bauteile (111-116) durch Voxeln erfolgt.

12. Fertigungssystem zum Herstellen von mindestens einem ersten (111-116) und mindestens einem weiteren Bauteil (120, 121, 122), umfassend:
- mindestens eine Fertigungsanlage (10, 20, 30) mit einem definierten begrenzten Bauraum (100), in dem ein oder mehrere Bauteile (111-116, 120-122) gefertigt werden können,
- einem Verteilersystem (40), das mit der mindestens einen Fertigungsanlage (10, 20, 30) verbunden ist, wobei das Verteilersystem (40) derart ausgebildet ist, dass die digitalen Daten der Bauräume (100) jeder Fertigungsanlage (10, 20, 30) und die digitalen ersten Bauteildaten Daten von in den jeweiligen Bauräumen (100) zu fertigenden ersten Bauteilen (111-116) verwaltet werden, und
- eine Empfangseinrichtung, die dazu ausgebildet ist, von einem potentiellen Auftraggeber (50) digitale weitere Bauteildaten zu empfangen, die mindestens ein weiteres, noch zu fertigendes Bauteil (120-122) und dessen Lage in dem Bauraum (100) repräsentieren, wobei die digitalen weiteren Bauteildaten **dadurch** generiert wurden, dass das mindestens eine weitere, noch nicht in Auftrag gegebene Bauteil (120-122) in dem definierten Bauraum (100) auf der Grundlage der Visualisierung des mindestens einen ersten Bauteils (111-116) und dessen Lage in dem definierten Bauraum (100) platziert wurde.

13. Fertigungssystem nach Anspruch 12, weiter umfassend:
- mindestens ein Userterminal (51), das mit dem Verteilersystem (40) verbindbar ist und das beinhaltet:
- eine Visualisierungseinrichtung (52), die dazu ausgebildet ist, einen oder mehrere Bauräume (100, 11-13, 21-23, 31-33) mit den darin zu fertigenden ersten Bauteilen (111-116) einem potentiellen Auftraggeber (50) visuell, insbesondere in 3D-Darstellung, darzustellen,
- eine Eingabeeinrichtung (53), die dazu ausgebildet ist, in einem mittels der Visualisierungseinrichtung (52) dargestellten Bauraum (100) mit den darin positionierten ersten Bauteilen (111-116) mindestens ein weiteres Bauteil (120, 121, 122) zu positionieren, und
- eine Übermittlungseinrichtung, die dazu ausgebildet ist, die digitalen Daten eines Bauraums (100) und des darin positionierten mindestens einen ersten Bauteils (111-116) und des mindestes einen weiteren Bauteils (120, 121, 122) an das Verteilersystem (40) zu übermitteln.

14. Fertigungssystem nach Anspruch 12 oder 13, weiter umfassend eine mit dem Verteilersystem verbundene Anonymisierungseinrichtung (45), die die digitalen Daten der zu fertigenden ersten Bauteile (111-116) derart verändert, dass die zu fertigenden ersten Bauteile (111-116) anonymisiert sind.

15. Fertigungssystem nach einem der Ansprüche 12-15, in dem eine Kostenberechnungseinrichtung vorhanden ist, die anhand des in einem Bauraum (100) positionierten mindestens einen ersten Bauteils (111-116) und des darin positionierten mindestens einen weiteren Bauteils (120, 121, 122) die Herstellungskosten jedes Bauteils (111-116, 120, 121, 122) auf der Grundlage aller in dem gleichen Bauraum (100) zu fertigenden Bauteile (111-116, 120, 121, 122) berechnet.

16. Fertigungssystem nach einem der Ansprüche 12-15, in dem eine Prüfeinrichtung vorhanden ist, die anhand der digitalen Daten aller in einem Bauraum (100) befindlichen ersten Bauteile (111-116) überprüft, ob der verbleibende Freiraum in dem Bauraum (100) ausreicht, das mindestens eine weitere Bauteil (120, 121, 122) zu fertigen.
